# EUROPEAN PATENT SPECIFICATION

(11) **EP 4 610 541 B1**
(45) Date of publication and mention of the grant of the patent: **29.07.2026**
(21) Application number: 25160874.1
(22) Date of filing: 28.02.2025
(51) Int. Cl.: F17C 1/00

(54) **PRESSURE VESSEL MADE OF THIN-WALLED WELDED STAINLESS STEEL CONTAINER AND METHOD OF ITS PRODUCTION**
DRUCKBEHÄLTER AUS DÜNNWANDIGEM GESCHWEISSTEM EDELSTAHLBEHÄLTER UND VERFAHREN ZU SEINER HERSTELLUNG
RÉCIPIENT SOUS PRESSION EN ACIER INOXYDABLE SOUDÉ À PAROI MINCE ET SON PROCÉDÉ DE FABRICATION

(30) Priority: 29.02.2024 CZ 20240077
(43) Date of publication of application: 03.09.2025
(73) Proprietor: A&S Composite s.r.o., 15521 Praha 5, Zlicin (CZ)
(72) Inventor: LUKYANETS, Vladislav, 15521 Praha 5, Zlicin (CZ)
(74) Representative: Kratochvil, Vaclav

(56) References cited:
- EP-A1- 3 869 080
- EP-A2- 0 203 631
- WO-A1-2011/103687
- US-A1- 2017 122 437
- US-A1- 2024 044 456
- US-B2- 7 731 051

## Description

### Field of the Invention

The invention relates to a pressure cylinder made of a thin-walled welded stainless steel vessel fitted with a composite shell and a neck with external and/or internal thread and its production method.

### Background of the Invention

Various design solutions of pressure cylinders are known from technical

A pressure cylinder is known from WO2011/103687 A1.

There are all-metal cylinders that are quite heavy; their mechanical properties are highly dependent on the chosen materials. Their maintenance is quite demanding as they can start to corrode and the like.

Furthermore, plastic pressure cylinders are known but have low strength and are only suitable for low-pressure fillings.

There are also pressure cylinders made of a thin-walled welded stainless steel vessel with a reinforced composite shell. The neck of the vessel consists of a separate element with a threaded hole or external threaded fitting. The neck is welded to the thin-walled vessel. During the production and operation of the cylinders, the neck is subjected to significant torque, which can lead to the destruction of the weld holding the neck.

One technical solution is known from patent EP 2532930, in which the flange is fixed in the ring using grooves of a non-circular shape. This solution is not optimal in terms of torque transfer because the composite fibers on the neck do not take the load longitudinally but only in combination with the polymer matrix, which significantly reduces the mechanical properties of the material. The circular groove also does not transfer axial loads, in contrast to the two tapered surfaces designed, which reliably prevent axial displacement of the neck and thus protect the weld from damage.

### Summary of the Invention

According to the present invention, the aforementioned deficiencies are mostly eliminated by a pressure cylinder made of a thin-walled welded stainless steel vessel fitted with a composite shell and a neck with an external and/or internal thread. Its essence is that the neck is attached to the thin-walled vessel by a circular welded seam with a hermetic seal. The neck contains a flange which is fitted circumferentially with a pair of tapered grooves on its outer surface whose adjacent sides meet on an annular ridge on which there are locking teeth in the direction of the longitudinal axis of the neck and composite fibers are placed in the inter-tooth spaces.

In an advantageous embodiment in the transverse direction, the inter-tooth spaces have a shape selected from the group of trapezoidal groove, U-shaped groove, and tapered hole.

The two designed tapered surfaces reliably prevent the axial displacement of the neck and thus protect the weld from damage.

A further essential aspect of the invention is the method of manufacturing the above-described pressure cylinder. Its essence is that a neck is welded to the thin-walled vessel with a hermetic seal, which contains a flange which is fitted circumferentially with a pair of tapered grooves on its outer surface meeting on an annular ridge on which there are locking teeth, whereupon composite fibers with stress less than the total force acting on the fiber bundle are wound into the grooves between the teeth and further around the shell. Next, further winding of the fiber around the neck is carried out while simultaneously moving bilaterally along the axis of the shell to position the fiber between the teeth, whereupon the fiber with the nominal stress value is wound, and the final winding of the reinforced composite shell is carried out.

The number of winding cycles with stress less than the total force acting on the fiber bundle preferably corresponds to the number of grooves between the teeth. modular construction system
A circular welded seam ensures a hermetic seal. The design and technological solution lie in the shape of the neck and also in the production method of these cylinders. To prevent damage and destruction of the weld, the flange is designed with locking teeth on the outer surface of the flange. The flange has two tapered grooves forming an annular ridge. In the next technological operation, trapezoidal grooves are made, or tapered holes are drilled in the transverse direction on the ridge to create the alternation of teeth and grooves.

The following cylinder production process consists of two phases.

In the first phase, the winding of the fibers is started with a low stress that does not exceed the total force acting on the fiber bundle to avoid damage to the weld seam of the neck. In this phase, further winding of the fiber around the neck is carried out while simultaneously moving bilaterally along the axis of the vessel so that the fiber lies between the teeth. The number of cycles should be equal to the number of grooves on the flange to ensure uniform fastening of the fiber.

In the second phase, the fiber stress is increased to the nominal value, and the final winding of the reinforced composite shell is performed. At the same time, additional threads of fiber can be made around the neck for a more reliable fixation of the neck during cylinder operation.

After the polymerization procedure, the reinforced shell and its part around the neck accept external loads more optimally due to the fact that, unlike known solutions, the fibers are intertwined around the teeth and work in tension.

### Brief Description of the Drawings

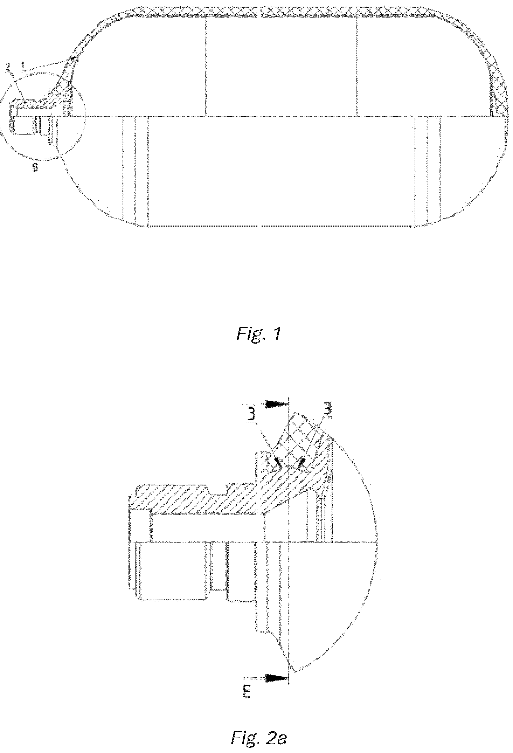

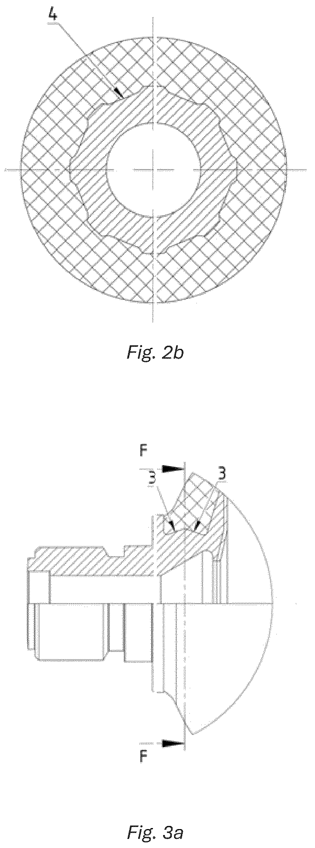

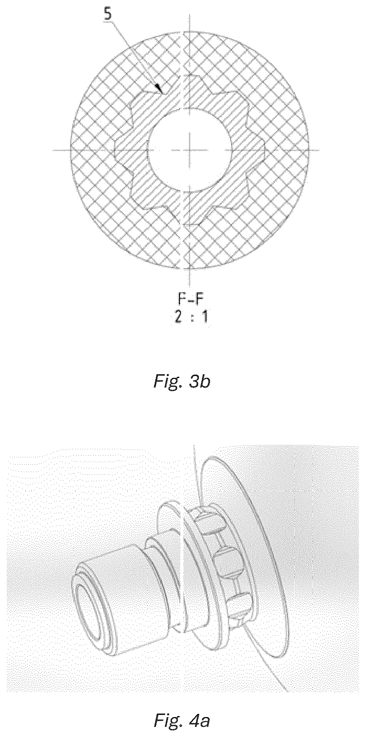

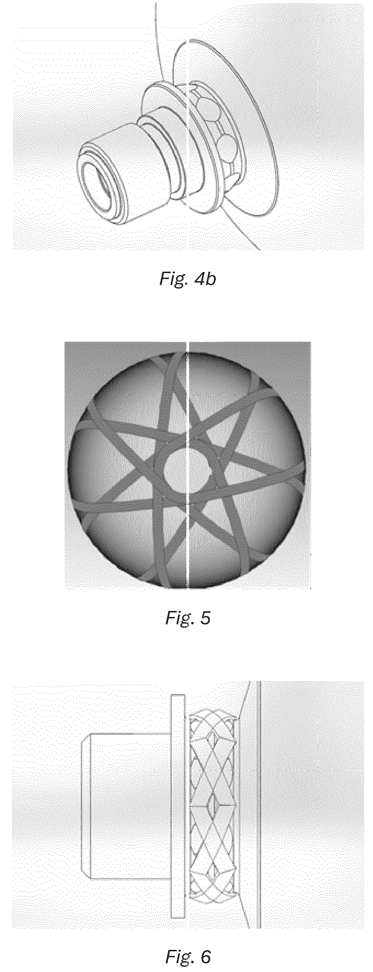

According to the present invention, the pressure cylinder will be described in more detail using specific exemplary embodiments using the accompanying drawings, where Fig. 1 shows an exemplary cylinder in a side view. Figs. 2a and 3a show details of the neck and Figs. 2b and 3b show this neck in the corresponding section. Figs. 4a and 4b show various grooves on the neck flange in an axonometric view. Fig. 5 shows a view of the cylinder in the direction of the neck, and Fig. 6 shows details of the fibers and neck.

### Exemplary Embodiments of the Invention

An exemplary pressure cylinder made of thin-walled welded stainless steel vessel 1 with a reinforced composite shell and neck 2 with an external thread, neck 2 is attached to the thin-walled vessel 1 by a circular welded seam with a hermetic seal. Neck 2 contains a flange which is fitted circumferentially with a pair of tapered grooves 3 on its outer surface whose adjacent sides meet on an annular ridge on which there are locking teeth in the direction of the longitudinal axis of the neck 2, and composite fibers are placed in the inter-tooth spaces 4, 5. The inter-tooth spaces 4, 5 have the shape of a trapezoidal groove in the transverse direction in one embodiment and a tapered groove in the other.

During the production of the pressure cylinder, neck 2 is welded to the thin-walled vessel 1 with a hermetic seal, which contains a flange which is fitted circumferentially with a pair of tapered grooves 3 on its outer surface meeting on an annular ridge on which there are locking teeth, whereupon composite fibers with stress less than the total force acting on the fiber bundle are wound into further grooves 4 and 5 between the teeth and then around the shell, and further winding of the fiber around the neck 2 is carried out while simultaneously moving bilaterally along the axis of the shell to position the fiber between the teeth, whereupon the fibers with a nominal stress value are wound and final winding of the reinforced composite shell is carried out. The number of winding cycles with stress less than the total force acting on the fiber bundle corresponds to the number of grooves between the teeth.

The combination of a thin-walled stainless steel liner and a reinforced composite shell made of high-strength carbon enables the production of a lightweight cylinder, which is very important when used as a storage tank for oxygen and other gases in the aerospace industry.

In addition, this technical solution will increase the structure's operational safety and reduce the weight of the reinforced shell in the neck area due to a more rational use of the properties of the composite material.

### Industrial Applicability

According to this technical solution, the pressure cylinder finds its application mainly in the aerospace industry, divers, firefighters, and the like.

## Claims

1. A pressure cylinder made of thin-walled welded stainless steel vessel (1) with a composite shell and a neck (2) with an external and/or internal thread, wherein the neck (2) is attached to the thin-walled vessel (1) by a circular welded seam with a hermetic seal and the neck (2) contains a flange which is fitted circumferentially with a pair of tapered grooves (3) on its outer surface whose adjacent sides meet on an annular ridge on which there are locking teeth in the direction of a longitudinal axis of the neck (2) and composite fibers are placed in inter-tooth spaces (4, 5).

2. The pressure cylinder according to claim 1, ***characterised* in *that*** the inter-tooth spaces (4, 5) have a shape selected from the group trapezoidal groove, U-shaped groove, and tapered hole in the transverse direction.

3. A method of producing a pressure cylinder made of thin-walled welded stainless steel vessel (1) with a composite shell and a neck (2) with an external and/or internal thread according to claim 1, **characterised in *that*** the neck (2) is welded to the thin-walled vessel with a hermetic seal, which contains a flange which is fitted circumferentially with a pair of tapered grooves on its outer surface meeting on an annular ridge on which there are locking teeth, whereupon composite fibers with stress less than the total force acting on the fiber bundle are wound into additional grooves between the teeth and then around the shell, and further winding of the fiber around the neck is carried out while simultaneously moving bilaterally along the axis of the shell to position the fiber between the teeth, whereupon fibers with a nominal stress value are wound, and final winding of the reinforced composite shell is carried out.

4. The method of producing the pressure cylinder according to claim 3, ***characterised* in *that*** the number of winding cycles with stress less than the total force acting on the fiber bundle corresponds to the number of additional grooves between the teeth.

## Patentansprüche

1. Druckflasche aus einem dünnwandigen, geschweißten Edelstahlbehälter (1), der mit einem Mantel aus Verbundwerkstoff versehen ist, und mit einem Hals (2), der mit einem Außen- und/oder Innengewinde versehen ist, ***wobei*** der Hals (2) mit dem dünnwandigen Behälter (1) durch eine umlaufende, hermetisch dichte Schweißnaht verbunden ist und einen Flansch enthält, der an seiner Außenfläche entlang des Umfangs mit einem Paar konischer Nuten (3) versehen ist, deren benachbarte Flanken an einem ringförmigen Kamm zusammentreffen, an dem in Richtung der Längsachse des Halses (2) Sicherungszähne vorgesehen sind, wobei in den Zahnlücken (4, 5) Fasern des Verbundwerkstoffs angeordnet sind.

2. Druckflasche nach Anspruch 1, ***dadurch gekennzeichnet, dass*** die Zahnlücken (4, 5) in Querrichtung eine Form aufweisen, die aus der Gruppe trapezförmige Nut, Nut mit U-Profil, konische Öffnung ausgewählt ist.

3. Verfahren zur Herstellung einer Druckflasche nach Anspruch ***1, dadurch gekennzeichnet, dass*** an den dünnwandigen Behälter ein Hals hermetisch dicht angeschweißt wird, der einen Flansch enthält, welcher an seiner Außenfläche entlang des Umfangs mit einem Paar konischer Nuten versehen ist, die an einem ringförmigen Kamm zusammentreffen, an dem Sicherungszähne vorgesehen sind, woraufhin in weitere Nuten zwischen den Zähnen und ferner um den Mantel Fasern des Verbundwerkstoffs mit einer Spannung gewickelt werden, die kleiner ist als die auf das Faserbündel wirkende Gesamtkraft, und anschließend ein weiteres Wickeln der Faser um den Hals bei gleichzeitiger beidseitiger Bewegung entlang der Achse des Mantels durchgeführt wird, um die Faser zwischen den Zähnen anzuordnen, woraufhin die Fasern mit dem Nennwert der Spannung gewickelt werden und das abschließende Wickeln des tragenden Verbundwerkstoffmantels durchgeführt wird.

4. Verfahren zur Herstellung einer Druckflasche nach Anspruch ***3, dadurch gekennzeichnet, dass*** die Anzahl der Wickelzyklen mit einer Spannung, die kleiner ist als die auf das Faserbündel wirkende Gesamtkraft, der Anzahl der weiteren Nuten zwischen den Zähnen entspricht.

## Revendications

1. Bouteille sous pression constituée d'un récipient en acier inoxydable soudé à paroi mince (1) muni d'une enveloppe en matériau composite et d'un col (2) pourvu d'un filetage extérieur et/ou intérieur, le col (2) étant relié au récipient à paroi mince (1) par un cordon de soudure circulaire assurant une étanchéité hermétique et comprend une bride qui est pourvue, sur sa surface extérieure et sur tout son pourtour, d'une paire de rainures coniques (3) dont les flancs adjacents se rejoignent au niveau d'une crête annulaire sur laquelle sont disposées, dans le sens de l'axe longitudinal du col (2), des dents de verrouillage et, dans les espaces interdentaires (4, 5) sont placées des fibres de matériau composite.

2. Bouteille sous pression selon la revendication 1, ***caractérisée en* ce que** les espaces interdentaires (4, 5) ont, dans le sens transversal, une forme choisie dans le groupe comprenant une rainure trapézoïdale, une rainure à profil en U et un trou conique.

3. Procédé de fabrication d'une bouteille sous pression selon la revendication 1, ***caractérisé en* ce qu'**un col est soudé de manière hermétique au récipient à paroi mince, ledit col comprenant une bride dont la surface extérieure périphérique est munie d'une paire de rainures coniques se rejoignant au niveau d'une crête annulaire portant des dents de verrouillage, après quoi des fibres d'un matériau composite sont enroulées dans d'autres rainures entre les dents puis autour de l'enveloppe, avec une tension inférieure à la force totale agissant sur le faisceau de fibres, puis un enroulement supplémentaire des fibres est effectué autour du col avec un déplacement bilatéral simultané le long de l'axe de l'enveloppe afin de positionner les fibres entre les dents, après quoi les fibres sont enroulées avec une valeur nominale de tension et l'enroulement final de l'enveloppe composite résistante est réalisé.

4. Procédé de fabrication d'une bouteille sous pression selon la revendication 3, ***caractérisé en* ce que** le nombre de cycles d'enroulement avec une tension inférieure à la force totale agissant sur le faisceau de fibres correspond au nombre de rainures supplémentaires entre les dents.
